Europäisches Patentamt

European Patent Office

Office européen des brevets

(11) Publication number: **0 234 764 B1**

# EUROPEAN PATENT SPECIFICATION

(45) Date of publication of patent specification: **07.08.91**   (51) Int. Cl.⁵: **H01R 4/72**

(21) Application number: **87300883.3**

(22) Date of filing: **02.02.87**

(54) **Forming joints.**

(30) Priority: **04.02.86 GB 8602668**

(43) Date of publication of application:
**02.09.87 Bulletin 87/36**

(45) Publication of the grant of the patent:
**07.08.91 Bulletin 91/32**

(84) Designated Contracting States:
**AT BE CH DE ES FR GB GR IT LI LU NL SE**

(56) References cited:
**EP-A- 0 040 957
DE-C- 684 743
FR-A- 2 414 263
FR-A- 2 500 223
GB-A- 2 107 532**

(73) Proprietor: **ALH SYSTEMS LIMITED
Station Road
Westbury Wiltshire BA13 4TN(GB)**

(72) Inventor: **Wade, Philip James
3 Linnet Way
Frome Somerset(GB)**
Inventor: **Curtis, Robert Leslie
66 Paxcroft Way
Trowbridge Wiltshire(GB)**

(74) Representative: **Calderbank, Thomas Roger et al
MEWBURN ELLIS & CO. 2/3 Cursitor Street
London EC4A 1BQ(GB)**

## Description

This invention relates to methods of forming branch-off joints between elongate members such as cables when a sealed enclosure must be formed around the joint.

Increasingly, this is being achieved by heat-shrinking of the material of a sleeve or casing around the branch to form an enclosure, the heating causing sealing of exits from the enclosure. The material is held together between the legs of the branch-off so that sealing will occur there also.

Examples are seen in GB-A-1604981. We are concerned in this invention with clips positioned between members when they are intended to have their centers coplanar as they emerge from such a joint.

The difficulty is that if a prior art clip is used in such situations it has nothing tending to preserve the intendedd coplanarity of the assembly, and misalignment occurs, due perhaps to lack of symmetry in assembly or in heating. This is undesirable since there is greater strain and a tendency for absence of seal on the side where there is a greater angle between the material and the clip.

It is also known from EP-A-0040957 to provide a clamping member (or clip) in which two interengagable parts define four channels, through which pass a sleeve of heat shrinkable material which surrounds four elongate members (branch cables). The shape of the interengagable parts is such as to define four channels, separated by the parts of the clamping member, for the elongate members. This document corresponds to the pre-characterising part of claims 1 and 2.

The present invention provides a clip with means for maintaining and holding the parts of the assembly in a fixed configuration, preferably more substantially in the desired coplanar configuration. Thus, according to the present invention, there is provided a method of forming a branch-off joint between a pair of elongate members, comprising surrounding the elongate members with a sleeve of heat-shrinkable material, positioning a clip having two elongate legs whose opposed surfaces define a slit therebetween, on the sleeve between the elongate members such that parts of the sleeve pass through the slit between the legs of the clip, and heat-shrinking the sleeve around the elongate members to form an enclosure;

characterised in that:

the clip has at least one pair of abutments, each abutment having a part on each side of the median plane of the clip extending towards respective elongate members, and the abutments of each pair extending in mutually opposed directions parallel to that median plane, such that, on each side of the median plane, the thickness of the clip in a direction parallel to the median plane is greater at a part of the clip lying beyond (in a direction perpendicular to the median plane) the slit defining surface of each leg on the corresponding side of the median plane than at any part of the clip being at or between (in a direction perpendicular to the median plane) the opposed surfaces of the legs, the abutments bearing directly or indirectly on the elongate members to hold the clip and the elongate members in a predetermined position during the heat shrinking of the sleeve.

The invention also provides a clip for carrying out the method of the invention, and a kit of parts comprising a clip of the invention together with a sleeve, for forming a branch-off joint. The abutments may be provided at one or more positions along the clip and preferably are arranged to equalize the angle which the material forms at each side as it passes to the nip formed between the legs of the clip. They are intended to press on the members (directly or indirectly through the intervening material) and cause them to adopt or maintain the chosen fixed arrangement, preferably one of coplanarity. Preferably, therefore, the abutments are raised equally from the mid-thickness of the clip and extend equally on each side of the median plane through its nip. They may be formed by a saddle conformation offering a continuous curve as the abutments. Each abutment may alternatively comprise at least two projecting elements which bear on the members. The abutments should have some length in the direction of the nip (the axial direction of the members) but then to prevent them becoming too massive and too heat-retaining they should be relieved, preferably by an aperture permitting air to flow through to assist in heat dispersion.

The abutments may be at two or more positions along the clip so as to prevent twisting of the members i.e. to maintain coplanarity over a substantial length of the members.

Furthermore, the clips may have means outward of the abutments for securing the clips together by, e.g. rods, screws or draw wires, such as to build-up a jig structure further to constrain the assembly of members, heat-shrinking material and clips.

Particular embodiments of the invention will now be described with reference to the accompanying drawings, wherein:-

Figs. 1a, 1b and 1c show-cross sections through "coplanar" assemblies of members emergent from a joint,

Figs. 1b and 1c show cross-sections through "coplanar" assemblies of members emergent from a joint, Figs. 1b and 1c showing prior art;

Fig. 2 is a face view of a first embodiment of a clip of the invention, Fig. 3 is a side view of it and Fig. 4 is an end view;

Fig. 5 is a face view of a second embodiment, Fig. 6 is a side view of it and Fig. 7 is a top view of it assembled;

Fig. 8 is a face view of a third embodiment, Fig. 9 is a side view and Fig. 10 is an end view of it assembled.

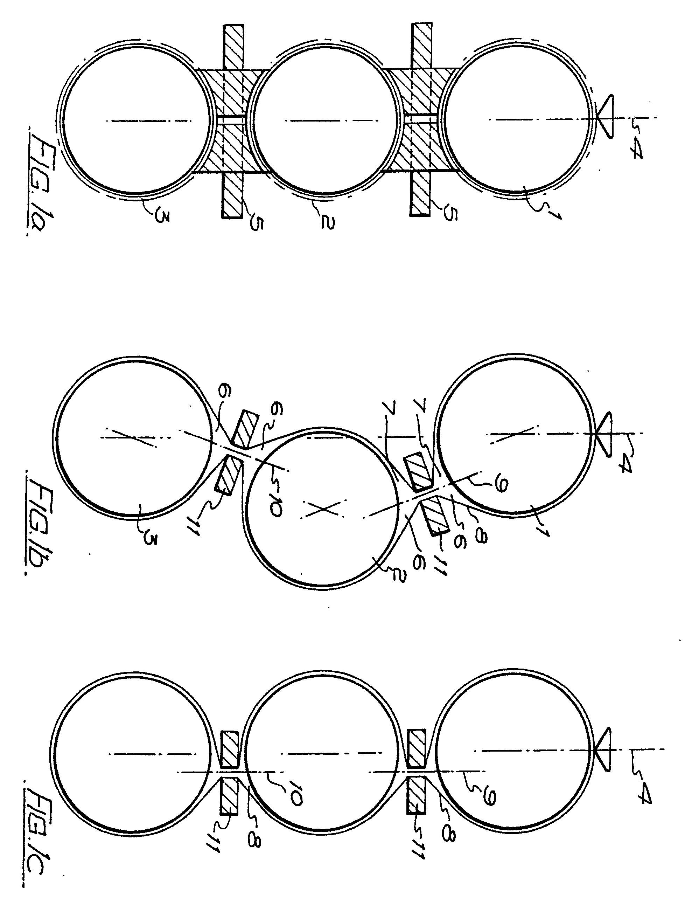

In Fig. 1a we see a section in a plane normal to the axial elongation of three cables 1,2 and 3 close to where they emerge from branch-off joints being formed from a container or a wrap-around sleeve of heat-shrinkable or heat-recoverable material, of the type seen in GB-A-1604981. Fig. 1a shows however the idea exactly coplanar condition of these three cables, their centres all being on the plane indicated by the construction line 4.

This coplanarity is achieved by clips 5 embodying the invention and which will be described in greater detail later. Figs. 1b and 1c show what may happen when prior art clips are used such as for example those in Figs. 1 to 3 of the said UK Patent. Although the intention is that coplanarity of the cables and the seals shall be maintained, as seen in Fig. 1b there is nothing to prevent the cables moving from a condition of coplanarity so that the angles 6,7 subtended between the heat-shrinkable material 8 and the adjacent part of the cable 1 or 2 or 3 become unequal on respective sides of the median plane 9,10 through the nip of clips 11. Where the angle increases as in the case of angle 6 there is increased strain on the joint in that area and an increased risk that there will not be perfect sealing.

As seen in Fig. 1c while the cables themselves may remain coplanar the clips 11 may become displaced to one side of the ideal plane 4. Again the effect is that the angles subtended by the material 8 as it goes into the nip of the clips become unequal with exactly the same effect as that described before.

Those distortions are of course undesired but may arise due to residual stress in the cables 1,2 or 3 or more likely due to slight unequalness in the application of the material 8 or in its heating. The clips such as clips 5 which embody the invention will now be described in various embodiments in greater detail.

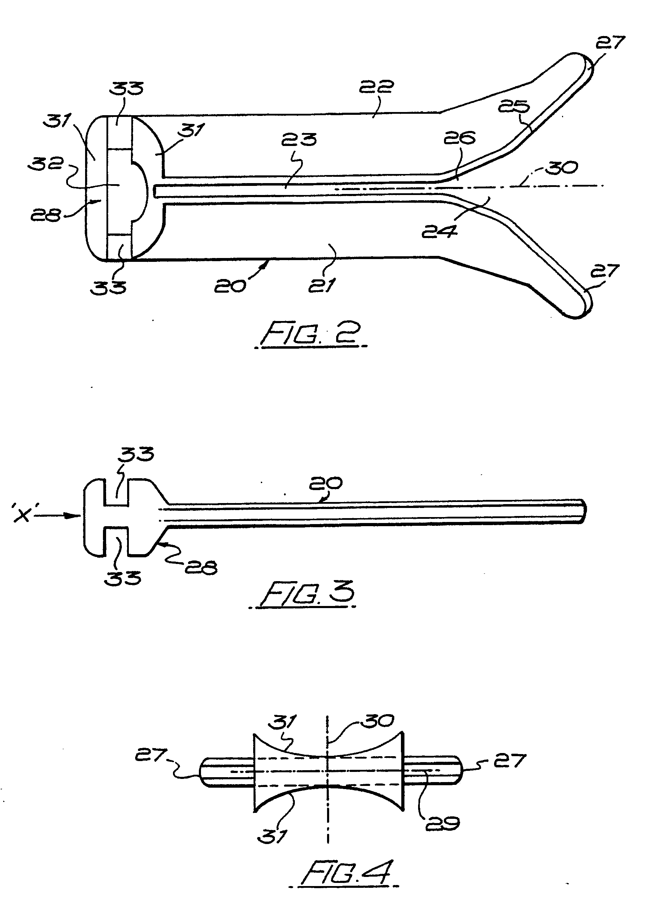

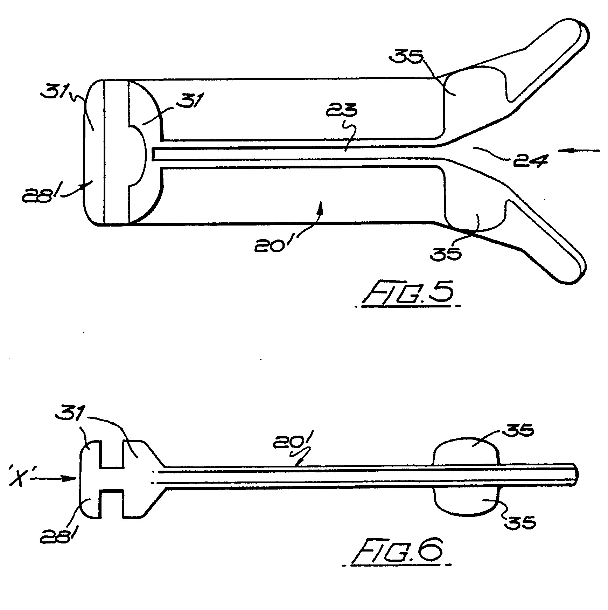

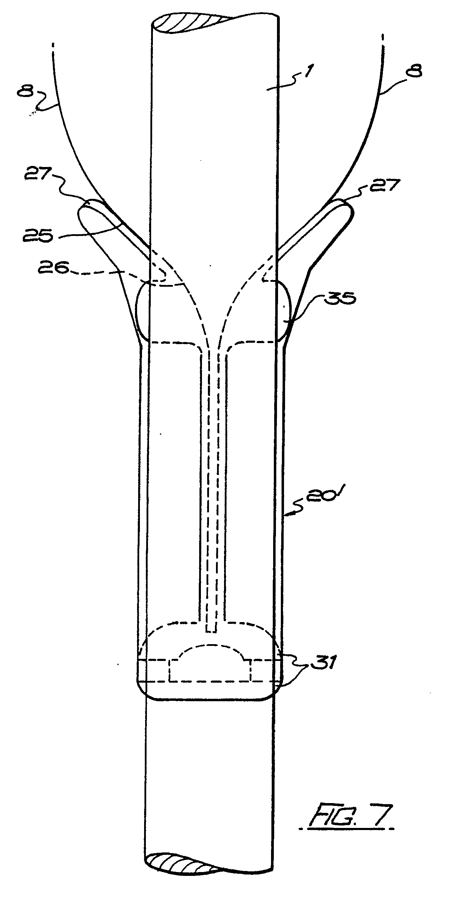

The clip 20 seen in Figs. 2,3 and 4 is generally of a U-form having two legs 21, 22 separated by a gap 23 which is of a width to be substantially that of two layers of the material which is to be held together in a nip by the clip. The legs 21,22 diverge to form a mouth 24 and this mouth has progressively from its open end portions 25 and 26 which are less steeply convergent towards parallel-walled gap 23. A rounded extreme end portion 27 of each leg offers a lead in to the mouth. The purpose of the convergent portions 25,26 is not only to continue the lead in effect but also to give a degree of actual support and shaping to the material forming the common part of the joint as it is transformed from the full diameter of the joint into the contact induced by the nip.

The legs 21,22 are united by a head 28 which provides positioning abutments for the cables which are to be sealed in the joint. These abutments, the shape of which is supposed to be seen in Fig. 4, rise equally from above that plane 29 which is in the middle of the thickness of the clip and equally on each side of the median plane 30 of the clip which is of course intended to be coincident with the plane 4 of the assembly. In this embodiment the abutments are in the form of a smooth curve 31 both on the upper and the lower surface of the clip. This curve is selected with a view to the expected radius of curvature of the cable or other member to be branched off in the joint to be formed. Alternatively, discontinuous abutments could be provided.

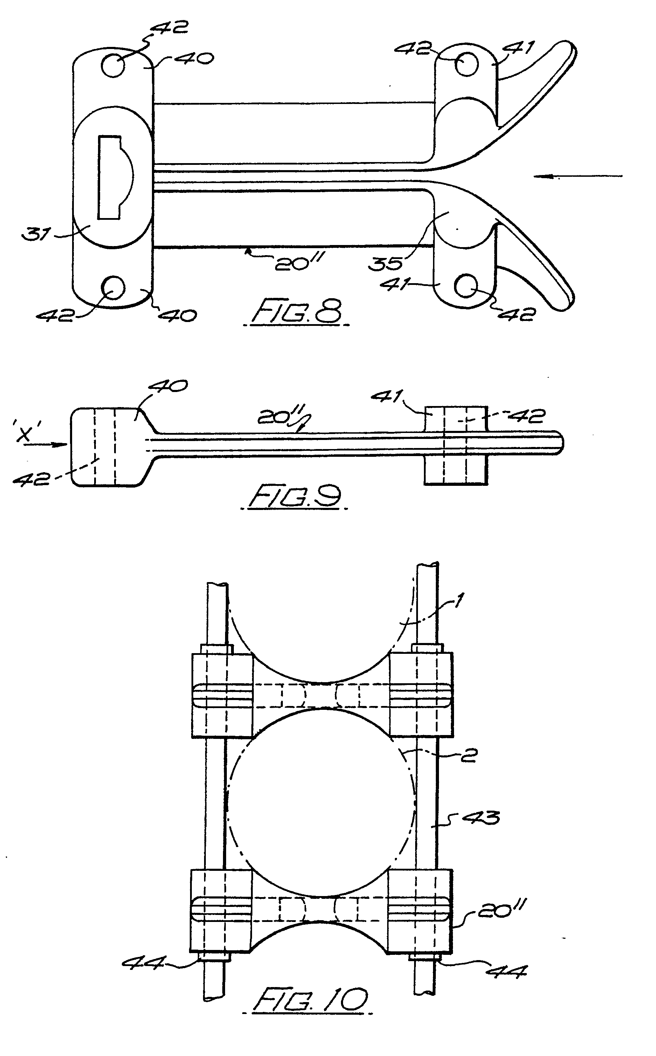

The abutments 31 are as best seen from Figs. 2 and 3 interrupted in the axial direction by an aperture 32. This is provided to relieve and lighten the head 28 which would otherwise become quite massive due to the presence of the abutment and also to decrease its heat-retaining capacity to assist in cooling of the clip. There are also preferably formed channels 33 to allow air throughflow through the aperture 32 despite the contact of the abutments 31 with the heat-shrinkable material forming the joint.

Even if the clip is destined to be left on the completed assembly this assistance in cooling is desirable.

The clips may be of any suitable material but a light metallic material such as aluminium or aluminium alloy will be preferred.

A second embodiment where a clip 20′ not only has abutment surfaces 31 as previously described on its head 28′ but has similar abutments of exactly similar characteristics and here given the reference 35 adjacent the position where the slit 23 then begins to open into the mouth 24. The intention of these is to conserve the coplanarity of the assembly over a substantial axial length of the members.

Fig. 7 shows in diagrammatic plan view how the spaced apart abutments 31,35 act on the cable 1 (and equally on the cable next adjacent on the other side of the nip formed by the clip), and by being at spaced apart positions can maintain the coplanarity over a substantial length and help to prevent twisting of one cable relative to another.

The embodiments seen in Figs. 8 to 10 is a clip 20″ where both beyond abutments 31 and abutments 35 are provided with wings, 40,41 on each lateral side. These have bore holes 42 which may be threaded.

The purpose of the bore holes is to receive rods, wires or screws running from one clip to the next in the assembly as can be seen from Fig. 10. Here, screw-threaded rods 43 run from one clip 20″ to the next and are retained and tightened by nuts 44. In this way an additional rigid structure may be built up constraining the clips and therefore the assembly into a strictly coplanar conformation. It is possible, of course, to provide wings such as 40,41 and associated tie bars by an appropriate modification of the embodiment of Figs. 2 to 4 and which has only one abutment along its length.

## Claims

1. A method of forming a branch-off joint between a pair of elongate members (1,2), comprising surrounding the elongate members (1,2) with a sleeve (8) of heat-shrinkable material, positioning a clip (5,20,20',20") having two elongate legs (21,22) whose opposed surfaces define a slit (23) therebetween, on the sleeve (8) between the elongate members (1,2) such that parts of the sleeve (8) pass through the slit (23) between the legs (21,22) of the clip (5,20,20',20"), and heat-shrinking the sleeve (8) around the elongate members (1,2) to form an enclosure;
   characterised in that:
   the clip (5,20,20',20") has at least one pair of abutments (31), each abutment having a part on each side of the median plane (30) of the clip (5,20,20',20"), extending towards respective elongate members (1,2), and the abutments (31) of each pair extending in mutually opposed directions parallel to that median plane (30), such that, on each side of the median plane (30), the thickness of the clip in a direction parallel to the median plane (30) is greater at a part of the clip lying beyond (in a direction perpendicular to the median plane) the slit defining surface of each leg on the corresponding side of the median plane than at any part of the clip being at or between (in a direction perpendicular to the median plane) the opposed surfaces of the legs, the abutments (31) bearing directly or indirectly on the elongate members (1,2) to hold the clip (5,20,20,20") and the elongate members (1,2) in a predetermined position during the heat shrinking of the sleeve (8).

2. A method of forming a branch-off joint between three or more elongate members (1,2,3) comprising surrounding the elongate members (1,2,3) with a sleeve of heat-shrinkable material (8) positioning a clip (5,20,20',20") having two elongate legs (21,22) whose opposed surfaces define a slit (23) therebetween, on the sleeve (8) between each pair of adjacent elongate members (1,2;2,3) such that parts of the sleeve (8) pass through the slit (23) between the legs (21,22) of the clip (5,20,20',20"), and heat-shrinking the sleeve (8) around the elongate members (1,2,3) to form an enclosure;
   characterised in that:
   each clip (5,20,20',20") has at least one pair of abutments (31), each abutment (31) having a part on each side of the median plane (30) of the clip (5,20,20',20") extending towards respective elongate members (1,2;2,3), and the abutments (31) of each pair extending in mutually opposed directions substantially parallel to that median plane (30) such that, on each side of the median plane, the thickness of the clip in a direction parallel to the median plane is greater at a part of the clip lying beyond (in a direction perpendicular to the median plane) the slit defining surface of each leg on the corresponding side of the median plane than at any part of the clip being at or between (in a direction perpendicular to the median plane) the opposed surfaces of the legs, the abutments (31) bearing directly or indirectly on the elongate members (1,2) to hold each clip (5,20,20',20") and its corresponding elongate members (1,2,3) in a predetermined position during the heat-shrinking of the sleeve (8) and wherein means are provided for rigidly interconnecting the clips (5,20,20',20").

3. A method according to claim 1 or claim 2, wherein that surface of each abutment (31) which bears directly or indirectly on its respective elongate member (1,2,3) is concave.

4. A method according to any one of the preceding claims, wherein each abutment (31) comprises at least two projecting elements, each element of an abutment (31) being substantially parallel to the other elements of the abutment (31) and to the median plane (30) of the clip and projecting towards an elongate member (1,2,3).

5. A method according to any preceding claim, wherein the abutments (31) of each pair project substantially equally in mutually opposed directions towards respective elongate members (1,2,3).

6. A method according to any of the preceding claims, wherein each abutment (31) extends on both sides of the median plane (30) through the clip (5,20,20',20") and wherein each abutment (31) extends substantially equally on either side of that median plane (30).

7. A method according to any one of the preceding claims wherein the clip (5,20,20',20") has two pairs of abutments (31,35) at spaced apart locations along the clip.

8. A method according to any one of the preceding claims, wherein the abutments (31,35) have apertures (32) therein.

9. A clip (5,20,20',20") having a pair of spaced apart elongate legs (21,22) whose opposed surfaces define a slit (23), and at least one pair of abutments (31), each abutment (31) having a part on each side of the median plane (30) of the clip (5,20,20',20") through the central line of the elongate legs (21,22), and the abutments (31) of each pair extending in mutually opposed directions substantially parallel to that plane (30) such that, on each side of the median plane, the thickness of the clip in a direction parallel to the median plane (30) is greater at a part of the clip lying beyond (in a direction perpendicular to the median plane) the slit defining surface of each leg on the corresponding side of the median plane than at any part being at or between (in a direction perpendicular to the median plane) the opposed surfaces of the legs.

10. A kit of parts comprising a clip (5,20,20',20") according to claim 9 and a sleeve (8) of heat-shrinkable material, the spacing between the legs (21,22) of the clip (5,20,20',20") being sufficient to permit the passage of parts of the sleeve (8).

**Revendications**

1. Procédé de formation d'une jonction de dérivation entre une paire de membres allongés (1,2,) consistant à entourer les membres allongés (1,2) avec une gaine (8) d'un matériau thermo-rétractable, à positionner un collier (5,20,20' ,20") ayant deux pattes allongées (21,22), dont les surfaces opposées définissent une fente (23) entre, sur la gaine (8) entre les membres allongés (1,2) de sorte que les parties de la gaine (8) passent à travers la fente (23) entre les pattes (21,22) du collier (5,20,20' ,20") et thermo-rétracter la gaine (8) autour des membres allongés (1,2) pour former une enceinte, caractérisé en ce que :

- le collier (5,20,20' ,20") comporte au moins une paire de butée (31), chaque butée ayant une partie sur chaque côté du plan médian (30) du collier (5,20,20' ,20") s'étendant vers les membres allongés respectifs (1,2), et les butées (31) de chaque paire s'étendant dans des directions mutuellement opposées parallèlement à ce plan médian (30), de sorte que, sur chaque côté du plan médian (30), l'épaisseur du collier dans une direction parallèle au plan médian (30) est plus grande à une partie du collier s'étendant au dessus (dans une direction perpendiculaire au plan médian) de la surface définissant la rainure de chaque patte sur le côté correspondant du plan médian que, à une partie quelconque du clip étant sur ou bien entre (dans une direction perpendiculaire au plan médian), les surfaces opposées des pattes, les butées (31) portant directement ou bien indirectement sur les membres allongés (1,2) pour maintenir le collier (5,20,20' ,20") et les membres allongés (1,2), dans une position prédéterminée pendant le thermo-rétractage de la gaine (8).

2. Procédé de formation d'une jonction de dérivation entre trois ou bien plus de trois membres allongés (1,2,3), consistant à entourer les membres allongés (1,2,3) avec une gaine de matériau thermo-rétractable (8) en positionnant un collier (5,20,20' ,20") ayant deux pattes allongées (21,22) dont les surfaces opposées définissent une fente (23) entre sur la gaine (8) entre chaque paire de membres allongés voisins (1,2 ; 2,3) de sorte que les parties de la gaine (8) passent à travers la fente (23), entre les pattes (21,22) du collier (5,20,20' ,20") et, thermo-rétracté la gaine (8) autour des membres allongés (1, 2, 3) pour former une enceinte ;

caractérisé en ce que :

- chaque collier (5,20,20' ,20") comporte au moins une paire de butées (31), chaque butée (31) ayant une partie sur chaque côté du plan médian (30) du collier (5,20,20;20") s'étendant vers les membres allongés respectifs (1,2 ; 2, 3), et les butées (31) de chaque paire s'étendant dans les directions mutuellement opposées sensiblement parallèlement à ce plan médian (30) de sorte que, sur chaque côté du plan médian, l'épaisseur du collier dans une direction parallèle au plan médian est plus grande à une partie du collier s'étendant au dessus (dans une direction perpendiculaire au plan médian) de la surface définissant la fente de chaque patte sur le côté correspondant du plan médian qu'à n'importe quelle partie du collier étant sur ou bien entre (dans une direction perpendiculaire au plan médian) les surfaces opposées des pattes, les butées (31) portant directement ou bien indirectement sur les membres allongés (1,2) pour maintenir chaque collier (5,20,20' ,20") et ses membres allongés correspondant (1,2,3) dans une position prédéterminée pendant le thermo-rétractage de la gaine (8) et dans lequel des moyens sont prévus pour interconneter rigidement les colliers (5,20,20' ,20").

3. Procédé selon la revendication 1 ou 2, dans lequel cette surface de chaque butée (31) qui porte directement ou indirectement sur son membre allongé respectif (1,2,3) est concave.

4. Procédé selon l'une quelconque des revendications précédentes, dans lequel chaque butée (31) comprend au moins deux éléments en saillie, chaque élément d'une butée (31) étant sensiblement parallèle aux autres éléments de la butée (31) et au plan médian (30) du collier et faisant saillie vers un membre allongé (1,2,3.)

5. Procédé selon l'une quelconque des revendications précédentes, dans lequel les butées (31) de chaque paire se projettent sensiblement également dans des directions opposées mutuellement en direction des membres allongés respectifs (1,2,3).

6. Procédé selon l'une quelconque des revendications précédentes, dans lequel chaque butée (31) s'étend sur les deux côtés du plan médian (30) à travers le collier (5,20,20' ,20") et dans lequel chaque butée (31) s'étend sensiblement également sur chaque côté de ce plan médian (30).

7. Procédé selon l'une quelconque des revendications précédentes dans lequel le collier (5,20,20' ,20") comporte deux paires de butées (31,35) à des localisations espacées les unes des autres le long du collier.

8. Procédé selon l'une quelconque des revendications précédentes, dans lequel les butées (31,35) comportent des ouvertures (32) à l'intérieur.

9. Collier (5,20,20', 20") comportant une paire de pattes allongées espacées l'une de l'autre (21,22) dont les surfaces opposées définissent une fente (23), et au moins une paire de butées (31), chaque butée (31) ayant une partie sur chaque côté du plan médian (30) du collier (5,20,20' ,20") à travers la ligne centrale des pattes allongées (21,22), et les butées (31) de chaque paire s'étendant dans des directions mutuellement opposées sensiblement parallèlement à ce plan (30) de sorte que, sur chaque côté du plan médian, l'épaisseur du collier dans une direction parallèle au plan médian (30) soit plus grande à une partie du collier s'étendant au dessus (dans une direction perpendiculaire au plan médian) de la surface définissant la fente de chaque patte sur le côté correspondant du plan médian qu'à n'importe quelle partie du collier étant sur ou bien entre (dans une direction perpendiculaire au plan médian) les surfaces opposées les pattes.

10. Jeu de pièces comprenant un collier (5,20,20' ,20") selon la revendication 9 et une gaine (8) de matériau thermo-rétractable , l'espace entre les pattes (21,22) du collier (5,20,20' ,20") étant suffisant pour permettre le passage des pièces de la gaine (8).

**Patentansprüche**

1. Verfahren zur Ausbildung einer Abzweigverbindung zwischen einem Paar von langgestreckten Elementen (1,2), umfassend Umgeben der langgestreckten Elemente (1,2) mit einer Hülse (8) aus wärmeschrumpfbarem Material, Positionieren einer Klemme (5, 20, 20', 20") mit zwei langgestreckten Schenkeln (21, 22), deren gegenüberliegende Flächen einen Schlitz (23) zwischen ihnen begrenzen, auf der Hülse (8) zwischen den langgestreckten Elementen (1,2) auf solche Weise, daß Teile der Hülse (8) den Schlitz (23) zwischen den Schenkeln (21, 22) der Klemme (5, 20, 20', 20") durchsetzen, und Wärmeschrumpfen der Hülse (8) um die langgestreckten Elemente (1,2) herum, um eine Umhüllung zu bilden;

dadurch gekennzeichnet, daß

die Klemme (5,20,20 ,20") wenigstens ein Paar von Widerlagern (31) aufweist, wobei jedes Widerlager einen Teil auf jeder Seite der Mittelebene (30) der Klemme (5,20,20' ,20") aufweist, der sich auf jeweilige langgestreckte Elemente (1,2) zu erstreckt, und sich die Widerlager (31) jedes Paares in gegenseitig gegenüberliegenden Richtungen parallel zu dieser Mittelebene (30) erstrecken, sodaß auf jeder Seite der Mittelebene (30) die Dicke der Klemme in einer Richtung parallel zur Mittelebene (30) in einem Teil der Klemme, der über die schlitzbegrenzende Oberfläche jedes Schenkels auf der korrespondierenden Seite der Mittelebene hinaus (in einer Richtung senkrecht zur Mittelebene) gelegen ist, größer ist als in irgend einem Teil der Klemme an oder zwischen (in einer Richtung senkrecht zur Mittelebene) den gegenüberliegenden Flächen der Schenkel, und daß die Widerlager (31) direkt oder indirekt auf die langgestreckten Elemente (1,2) drücken, um die Klemme (5,20,20' ,20") und die langgestreckten Elemente (1,2) während des Wärmeschrumpfens der Hülse (8) in einer vorgegebenen Stellung zu halten.

2. Verfahren zur Ausbildung einer Abzweigungsverbindung zwischen drei oder mehr langgestreckten Elementen (1,2,3) umfassend Umgeben der langgestreckten Elemente (1,2,3) mit einer Hülse (8) aus wärmeschrumpfbarem Material, Positionieren einer Klemme (5,20, 20', 20") mit zwei langgestreckten Schenkeln (21, 22), deren gegeüberliegende Flächen einen Schlitz (23) zwischen sich begrenzen, auf der Hülse (8) zwischen jedem Paar von angrenzenden langgestreckten Elementen (1,2; 2,3) auf solche Weise, daß Teile der Hülse (8) den Schlitz (23) zwischen den Schenkeln (21, 22) der Klemme (5,20,20',20") durchsetzen und Wärmeschrumpfen der Hülse (8) um die langgestreckten Elemente (1,2,3) herum, um eine Umhüllung zu bilden;

dadurch gekennzeichnet, daß

jede Klemme (5,20,20' ,20") wenigstens ein Paar von Widerlagern (31) aufweist, jedes Widerlager (31) einen Teil auf jeder Seite der Mittelebene (30) der Klemme (5,20,20' ,20") besitzt, der sich auf jeweilige langgestreckte Elemente (1,2: 2,3) zu erstreckt und sich die Widerlager (31) jedes Paares in gegenseitig gegenüberliegenden Richtungen im wesentlichen parallel zu dieser Mittelebene (30) so erstrecken, daß auf jeder Seite der Mittelebene die Dicke der Klemme in einer Richtung parallel zur Mittelebene in einem Teil der Klemme, der (in einer Richtung senkrecht zur Mittelebene betrachtet) jenseits der schlitzbegrenzenden Fläche jedes Schenkels auf der korrespondierenden Seite der Mittelebene gelegen ist, größer ist als in jedem anderen Teil der Klemme an oder zwischen (in einer Richtung senkrecht zur Mittelebene betrachtet) den gegenüberliegenden Flächen der Schenkel, daß die Widerlager (31) direkt oder indirekt auf die langgestreckten Elemente (1,2) drücken, um jede Klemme (5, 20, 20', 20") und ihre entsprechenden langgestreckten Elemente (1,2,3) während des Wärmeschrumpfens der Hülse (8) in einer vorgegebenen Stellung zu halten und worin eine Einrichtung zur starren wechselseitigen Verbindung der Klemmen (5,20,20' ,20") vorgesehen ist.

3. Verfahren nach Anspruch 1 oder 2, worin jene Fläche jedes Widerlagers (31), die direkt oder indirekt auf ihr jeweiliges langgestrecktes Element (1,2,3) drückt, konkav ist.

4. Verfahren nach einem der vorhergehenden Ansprüche, worin jedes Widerlager (31) wenigstens zwei vorspringende Elemente umfaßt, jedes Element eines Widerlagers (31) im wesentlichen parallel zu den anderen Elementen des Widerlagers (31) und zur Mittelebene (30) der Klemme verläuft und auf ein langgestrecktes Element (1,2,3) zu vorspringt.

5. Verfahren nach einem der vorhergehenden Ansprüche, worin die Widerlager (31) jedes Paares im wesentlichen gleich in gegenseitig gegenüberliegenden Richtungen auf jeweilige langgestreckte Elemente (1,2,3) zu vorspringen.

6. Verfahren nach einem der vorhergehenden Ansprüche, worin sich jedes Widerlager (31) auf beiden Seiten der Mittelebene (30) durch die Klemme (5,20,20' ,20") erstreckt und worin sich jedes Widerlager (31) im wesentlichen gleich auf beiden Seiten dieser Mittelebene (30) erstreckt.

7. Verfahren nach einem der vorhergehenden Ansprüche, worin die Klemme (5,20,20' ,20") Zwei Paare von Widerlagern (31, 35) an im Abstand voneinander angeordneten Stellen entlang der Klemme aufweist.

8. Verfahren nach einem der vorhergehenden Ansprüche, worin die Widerlager (31, 35) mit darin ausgebildeten Öffnungen (32) versehen sind.

9. Klemme (5,20,20' ,20") mit einem Paar von im Abstand voneinander angeordneten, langgestreckten Schenkeln (21, 22), deren gebenüberliegende Flächen einen Schlitz (23) begrenzen, und mit wenigstens einem Paar von Widerlagern (31), wobei sich ein Teil jedes Widerlagers (31) auf jeder Seite der Mittelebene (30) der Klemme (5,20,20' ,20") durch die Mittellinie der langgestreckten Schenkel (21, 22) befindet und sich die Widerlager (31) jedes Paares in gegenseitig gegenüberliegenden Richtungen im wesentlichen parallel zu dieser Ebene (30) auf solche Weise erstrecken, daß auf jeder Seite der Mittelebene die Dicke der Klemme in einer Richtung parallel zur Mittelebene (30) in einem Teil der Klemme, der (in einer Richtung senkrecht zur Mittelebene betrachtet) jenseits der schlitzbegrenzenden Fläche jedes Schenkels auf der korrespondierenden Seite der Mittelebene gelegen ist, größer als in jedem anderen Teil der Klemme ist, der (in einer Richtung senkrecht zur Mittelebene betrachtet) an oder zwischen den gegenüberliegenden Flächen der Schenkel gelegen ist.

10. Satz von Teilen umfassend eine Klemme (5,20,20' ,20") nach Anspruch 9 und eine Hülse (8) aus wärmeschrumpfbarem Material, wobei der Abstand zwischen den Schenkeln (21, 22) der Klemme (5,20,20' ,20") ausreichend groß ist, um das Durchtreten von Teilen der Hülse (8) zuzulassen.

FIG.1a.

FIG.1b.

FIG.1c.

*FIG. 2*

*FIG. 3*

*FIG.4*

_FIG.5._

_FIG.6._

FIG. 7

FIG.8

FIG.9

FIG.10